# EUROPÄISCHE PATENTSCHRIFT

(11) **EP 3 561 458 B1**
(45) Veröffentlichungstag und Bekanntmachung des Hinweises auf die Patenterteilung: **17.03.2021**
(21) Anmeldenummer: 18168818.5
(22) Anmeldetag: 23.04.2018
(51) Int. Cl.: G01D 21/00, G01D 21/02

(54) **VERFAHREN ZUR ERFASSUNG EINER RÄUMLICHEN VERTEILUNG EINER MESSBAREN PHYSIKALISCHEN GRÖSSE**
METHOD FOR DETECTING A SPATIAL DISTRIBUTION OF A MEASURABLE PHYSICAL QUANTITY
PROCÉDÉ DE DÉTECTION DE RÉPARTITION SPATIALE D'UNE GRANDEUR PHYSIQUE MESURABLE

(43) Veröffentlichungstag der Anmeldung: 30.10.2019
(73) Patentinhaber: HoloMetrix GmbH, 64390 Erzhausen (DE)
(72) Erfinder: Marschner, Holger, 61440 Oberursel (DE); Pfaff, Alexander, 64390 Erzhausen (DE); Vogel, Stefan, 55126 Mainz (DE); Morschel, Christopher, 61352 Bad Homburg (DE); Hahmann, Jens, 64401 Groß-Bieberau (DE)
(74) Vertreter: Habermann Intellectual Property Partnerschaft von Patentanwälten mbB

(56) Entgegenhaltungen:
- EP-A1- 3 168 631
- WO-A1-2017/116353
- DE-A1- 19 939 547
- JP-A- 2006 170 781

## Beschreibung

Die Erfindung betrifft ein Verfahren zur Erfassung einer räumlichen Verteilung einer mit einem mobilen Messgerät messbaren physikalischen Größe innerhalb eines Messraums, wobei an mehreren vorgebbaren Messorten, die räumlich voneinander beabstandet sind, innerhalb des Messraums jeweils eine Messung der physikalischen Größe mit dem mobilen Messgerät durchgeführt und das jeweilige Messergebnis dem betreffenden Messort zugeordnet wird.

Ein aus der Praxis bekanntes Beispiel für einen Anwendungsfall eines derartigen Verfahrens ist beispielsweise die normierte Erfassung der räumlichen Verteilung der Geräuschemission einer Geräuschquelle. Die Normreihen DIN EN ISO 374x bzw. DIN EN ISO 9614-x beschreiben unterschiedliche Verfahren zur Bestimmung der Schallleistungs- und Schallenergiepegel von Geräuschquellen. Alle Verfahren sind dadurch gekennzeichnet, dass ein Schallmessgerät oder mehrere Schallmessgeräte in einem bestimmten Abstand von einer Geräuschquelle auf einer definierten Messfläche oder auf definierten Messorten in einem Messraum positioniert werden müssen. Die verschiedenen Normen unterscheiden sich dadurch, dass entweder unterschiedliche Schallmessgeräte zum Einsatz kommen wie beispielsweise Mikrofone, Schallintensitätssonden etc., oder durch die Position und gegebenenfalls Reihenfolge der einzelnen Messorte, an denen jeweils eine Messung durchgeführt werden soll. Die einzelnen Messorte können entweder an diskreten Positionen innerhalb eines Messraums angeordnet sein, oder beispielsweise durch einen mäanderförmig, spiralförmig oder anderweitig quasikontinuierlich vorgegebenen Verlauf in dem Messraum angeordnet sein. Bei den einzelnen Messorten handelt es sich dabei regelmäßig um nicht sichtbare oder fühlbare Positionen innerhalb des Messraums, die lediglich durch die jeweilige Position relativ zu der Geräuschquelle vorgegeben sind. In vielen Fällen ist es zweckmäßig oder durch eine entsprechende Norm vorgegeben, dass die einzelnen Messorte auf einer die Geräuschquelle umgebenden Hüllfläche angeordnet sind, wobei die Hüllfläche beispielsweise ein Quader, eine Halbkugel, ein Zylinder oder ein Halbzylinder sein kann, sodass in einem nahezu gleichbleibenden Abstand zu der Geräuschquelle die jeweilige Schallemission in den Messraum erfasst und vermessen werden kann.

DE 199 39 547 A1 offenbart eine Vorrichtung und ein Verfahren zur Bestimmung der ortsaufgelösten und oberflächengetreuen Schalleistung eines zur Erzeugung von Schallschwingungen anregbaren Meßobjektes mittels einer Meßsonde.

Mit einem eingangs beschriebenen Verfahren können nicht nur die räumliche Verteilung einer Geräuschemission, sondern auch die räumlichen Verteilungen von beliebigen skalaren physikalischen Größen wie beispielsweise Luftdruck, Schalldruck, Temperatur, etc. oder von vektoriellen physikalischen Größen wie beispielsweise Schallschnelle, Strömung, magnetische Flussdichte, elektrische Feldstärke, etc. räumlich aufgelöst und an nahezu beliebig vorgegebenen Messorten innerhalb eines Messraums gemessen werden. Die Erfassung eines räumlich aufgelösten Messfeldes einer physikalischen Größe wird in vielen unterschiedlichen Anwendungsbereichen sowohl in der Entwicklung als auch in der Qualitätskontrolle oder bei Wartungs- und Reparaturarbeiten benötigt.

Das zuverlässige Positionieren eines Messgeräts an oder das kontinuierliche Entlangführen eines Messgeräts entlang eines vorgegebenen Bewegungspfads gestaltet sich oftmals als sehr schwierig, da die einzelnen Messorte in dem Messraum regelmäßig nicht gesondert gekennzeichnet bzw. sichtbar sind. In der Praxis werden deshalb in einigen Fällen aufwendige Hilfskonstruktionen errichtet, um dadurch die einzelnen Messpunkte kennzeichnen und während der Durchführung des Verfahrens anzeigen zu können. So können beispielsweise Gerüste mit abgespannten Schüren und gesonderten Kennzeichnungen für einzelne Messpunkte an den abgespannten Schnüren errichtet werden, was jedoch mit einem erheblichen Aufwand verbunden ist. Es ist ebenfalls aus der Praxis bekannt, dass die Positionierung des Messgeräts an den jeweiligen Messorten dem Augenmaß des die Messungen durchführenden Benutzers überlassen wird, wodurch oftmals die Zuverlässigkeit und die Reproduzierbarkeit der Ergebnisse beeinträchtigt wird. Die räumlich aufgelöste Erfassung der einzelnen Messwerte muss dabei oftmals wegen einer individuellen Anpassung des Messraums und der Verteilung der einzelnen Messorte an die jeweiligen Anforderungen mit einem hohen Aufwand durchgeführt werden. Die Durchführung der Erfassung der räumlichen Verteilung der mit dem mobilen Messgerät messbaren physikalischen Größe innerhalb eines Messraums ist deshalb entweder mit einem erheblichen Arbeits- und Zeitaufwand verbunden, oder die erreichbare Messgenauigkeit ist erheblich eingeschränkt.

Es wird deshalb als eine Aufgabe der vorliegenden Erfindung angesehen, ein Verfahren der eingangs genannten Gattung so auszugestalten, dass das Verfahren mit möglichst geringem Zeitaufwand und gleichzeitig mit einer möglichst hohen Messgenauigkeit durchgeführt werden kann.

Diese Aufgabe wird erfindungsgemäß dadurch gelöst, dass zur Messung an einem Messort mit Hilfe einer Messgerätpositionserfassungseinrichtung eine aktuelle Messgeräteposition ermittelt wird, dass anschließend ein Messgeräteabstand zwischen dem noch zu erfassenden Messort und der aktuellen Messgeräteposition ermittelt wird, wobei eine Abweichung zwischen der aktuellen Messgeräteposition von dem zu erfassenden Messort mit Hilfe einer Anzeigeeinrichtung angezeigt wird, falls der ermittelte Messgeräteabstand größer als ein vorgegebener Messorttoleranzwert ist, und wobei mit dem mobilen Messgerät die Messung der physikalischen Größe durchgeführt wird, wenn der Messgeräteabstand geringer als ein vorgegebener Messorttoleranzwert ist. Durch die Unterstützung bei der Anordnung des Messgeräts an dem vorgegebenen Messort kann das Messgerät in kurzer Zeit präzise an dem Messort positioniert und anschließend eine Messung durchgeführt werden. Da entweder der Messort oder eine für die Positionierung des Messgeräts an dem Messort hilfreiche Information wie beispielsweise die Richtung und der noch verbleibende Abstand zwischen dem Messgerät und dem Messort über die Anzeigeeinrichtung angezeigt werden, kann ein Benutzer mit Hilfe der Anzeigeeinrichtung das Messgerät rasch und sehr präzise an dem Messort anordnen. Es ist nicht notwendig, zunächst ein Gerüst zu errichten und daran die einzelnen Messorte zu markieren.

Mit der Anzeigeeinrichtung kann beispielsweise die Position des aktuellen Messorts relativ zu dem Objekt sowie relativ zu der aktuellen Messgeräteposition angezeigt werden. Der Benutzer kann dann die Position des Messgeräts solange verändern, bis die Messgeräteposition und der aktuelle Messort übereinstimmen. Mit der Anzeigeeinrichtung können auch alternativ oder zusätzlich beispielsweise eine Richtung und ein noch verbleibender Abstand zwischen der Messgeräteposition und dem zu vermessenden Messort angezeigt werden.

Die Anzeigeeinrichtung kann dabei die für die richtige Positionierung des Messgeräts notwendigen Informationen entweder visuell, akustisch oder auch taktil dem Benutzer anzeigen. In vielen Fällen dürfte eine grafische Anzeige des Messfelds oder eines Ausschnitts des Messfelds, des darin befindlichen Messortes und der aktuellen Position des Messgeräts innerhalb des Messraums eine besonders einfache, zuverlässige und intuitiv nutzbare Information für den Benutzer sein. Es ist aber auch möglich und denkbar, beispielsweise über ein Audiosignal mit unterschiedlichen Frequenzen eine Richtung und mit unterschiedlicher Intensität den aktuellen Abstand zwischen dem Messgerät und dem nächsten vorgegebenen Messort mitzuteilen.

Die Anzeigeeinrichtung zeigt zweckmäßigerweise kontinuierlich oder in vorgebbaren zeitlichen Abständen die für die richtige Positionierung des Messgeräts notwendigen Informationen an, solange der aktuelle Abstand zwischen dem Messgerät und dem vorgegebenen Messort noch zu groß ist und deshalb noch keine sinnvolle Messung durchgeführt werden kann. Sobald der aktuelle Abstand geringer als der vorgegebene Messorttoleranzwert ist, kann mit der Anzeigeeinrichtung entweder ausschließlich oder zusätzlich zu den Positionierungsinformationen eine Messdurchführungsinformation angezeigt werden, mit welcher der Benutzer darüber informiert wird, dass er die Messung mit dem mobilen Messgerät durchführen kann.

Es ist optional mit geeignet ausgestatteten mobilen Messgeräten auch möglich und im Hinblick auf ein möglichst automatisiert durchgeführtes Messverfahren vorteilhaft, dass automatisiert eine Messung ausgelöst wird, sobald der Benutzer das mobile Messgerät ausreichend nahe an den Messort herangeführt hat und der Messgeräteabstand geringer als der vorgegebene Messorttoleranzwert ist. Das automatisierte Auslösen einer Messung kann beispielsweise mit Hilfe einer an dem Messgerät angeordneten oder integrierten Auslöseeinrichtung erfolgen, die datenübertragend mit der Messgerätpositionserfassungseinrichtung verbunden ist und von der Messgerätpositionserfassungseinrichtung ein Auslösesignal erhält, sobald die Messung durchgeführt werden kann oder soll.

Es ist auch denkbar und gemäß einer vorteilhaften Ausgestaltung des Erfindungsgedankens vorgesehen, dass die Genauigkeit vorgegeben und an verschiedene Anforderungen angepasst werden kann, mit welcher das Messgerät an einen Messort herangeführt werden soll, bevor eine Messung durchgeführt wird. So kann beispielsweise in Abhängigkeit von der Größe des Messraums eine Genauigkeit von einigen Prozent des Messraums vorgegeben werden, sodass bei einem größeren Messraum ein größerer Messgeräteabstand zwischen dem Messgerät und dem vorgegebenen Messort noch toleriert wird, während bei einem kleinen Messraum nur ein entsprechend kleinerer Messgeräteabstand zulässig ist, um eine diesem Messort zugeordnete Messung durchzuführen. Es ist ebenfalls möglich, dass ein Genauigkeitsmaß vorgegeben wird und abhängig davon die maximale Messorttoleranz zwischen dem Messgerät und dem Messort bestimmt wird, die für eine Messung mit dem Messgerät zu diesem Messort noch toleriert wird. So kann beispielsweise bei einem Abstand eines Messortes von der Geräuschquelle von 1 Meter ein Messgeräteabstand von bis zu 10 cm toleriert werden, während bei einem Abstand des Messortes von 5 Metern ein Messgeräteabstand von bis zu 25 cm toleriert wird.

Als Messgerätepositionserfassungseinrichtung ist jede Einrichtung geeignet, die innerhalb des Messraums eine ausreichend genaue Positionsbestimmung des Messgeräts ermöglichst. Dies kann beispielsweise eine optische Bilderfassungseinrichtung in Verbindung mit einer Auswerteeinrichtung sein, wobei ein mit der Bilderfassungseinrichtung aufgenommenes Bild des Messgeräts in dem Messraum mit der Auswerteeinrichtung ausgewertet werden kann, um die Position des Messgeräts in dem Messraum zu bestimmen. Der Messraum kann zu diesem Zweck eine Anzahl von Positionsmarkierungen aufweisen, anhand derer die Position des Messgeräts innerhalb des Messraums bestimmt werden kann. Es ist ebenfalls denkbar, dass die Messgerätepositionserfassungseinrichtung einen oder mehrere Ortssensoren oder Abstandssensoren aufweist, mit welchen die Position in dem Messraum oder relativ zu vorgegebenen Objekten oder Begrenzungsflächen in oder um den Messraum ermittelt werden kann.

Gemäß einer vorteilhaften Ausgestaltung des Erfindungsgedankens ist vorgesehen, dass zur Messung an einem Messort mit Hilfe einer Messgerätausrichtungserfassungseinrichtung eine aktuelle Messgeräteausrichtung des mobilen Messgeräts in dem Messraum ermittelt wird, und dass eine Ausrichtungsabweichung zwischen der aktuellen Messgeräteausrichtung von einer für den betreffenden Messort vorgegebenen Messgeräteausrichtung ermittelt wird. Bei vielen Messgeräten hängt das mit dem Messgerät erfasste Messergebnis auch von einer Ausrichtung des Messgeräts relativ zu dem Messraum bzw. zu einem Referenzort innerhalb des Messraums ab. Durch die Erfassung der aktuellen Messgeräteausrichtung kann mit der anschließenden Ermittlung der Ausrichtungsabweichung des Messgeräts die Abweichung als Differenz zwischen der für den Messort vorgegebenen Ausrichtung und der aktuellen Ausrichtung des Messgeräts festgestellt und berücksichtigt werden. So kann beispielsweise bei der Erfassung eines Messwerts mit dem Messgerät dessen aktuelle Ausrichtung oder dessen Ausrichtungsabweichung zusammen mit dem Messwert hinterlegt werden. Bei Messgeräten mit einer bekannten räumlichen Empfindlichkeitscharakteristik kann dann bei der Auswertung des gemessenen Messwerts für den betreffenden Messort eine von der aktuellen Ausrichtung des Messgeräts abhängige Korrektur des Messwerts erfolgen.

Es ist ebenfalls möglich und im Hinblick auf eine möglichst präzise Messung vorteilhaft, dass zur Messung an einem Messort eine Ausrichtungsabweichung zwischen der aktuellen Messgeräteausrichtung von einer für den betreffenden Messort vorgegebenen Messgeräteausrichtung mit Hilfe einer Anzeigeeinrichtung angezeigt wird, falls die in dem Messgerätekontrollschritt ermittelte Ausrichtungsabweichung größer als ein vorgegebener Ausrichtungstoleranzwert ist, und dass mit dem mobilen Messgerät die Messung der physikalischen Größe nur dann durchgeführt wird, wenn die Ausrichtungsabweichung geringer als ein vorgegebener Ausrichtungstoleranzwert ist. Auf diese Weise kann der die Messungen durchführende Benutzer die Ausrichtung des mobilen Messgeräts vor der Durchführung der Messung überprüfen und gegebenenfalls verändern, um die Messung mit der für den betreffenden Messort vorgegebenen Ausrichtung des Messgeräts durchzuführen. Eine nachträgliche Korrektur des Messwerts kann dann in vielen Fällen entfallen. Zudem können auch dann präzise Messungen durchgeführt werden, wenn eine räumliche Empfindlichkeitscharakteristik des mobilen Messgeräts nicht bekannt oder zumindest nicht präzise bekannt ist.

Gemäß einer vorteilhaften Ausgestaltung des Erfindungsgedankens ist vorgesehen, dass für die Erfassung einer räumlichen Verteilung einer mit einem mobilen Messgerät messbaren physikalischen Größe innerhalb eines Messraums eine Anzahl von vorgegebenen Messverteilungen mit jeweils mehreren Messorten relativ zu einem Referenzort in dem Messraum vorgegeben werden und nach Auswahl einer der mehreren Messverteilungen die mehreren Messorte der ausgewählten Messverteilung nacheinander auf der Anzeigevorrichtung angezeigt werden, wobei ein auf den aktuellen Messort nachfolgender Messort angezeigt wird, sobald mit dem mobilen Messgerät die Messung der physikalischen Größe an dem aktuellen Messort durchgeführt wurde. Für normierte oder zumindest standardisierte Messverfahren sind jeweils die Anzahl und die Verteilung der Messorte innerhalb des Messraums vorgegeben, an denen jeweils eine Messung durchgeführt werden muss, um das betreffende normierte oder standardisierte Messverfahren durchzuführen, um als Ergebnis die entsprechende normgerechte oder standardisierte räumliche Verteilung der Messwerte zu erhalten. So sind beispielsweise im Zusammenhang mit der Messung einer Schallemission einer Geräuschquelle verschiedene die Geräuschquelle und unterschiedlichen Abständen umgebende Hüllflächen mit unterschiedlicher Formgebung und mit jeweils einer unterschiedlichen Anzahl von über die Hüllfläche verteilte Messorte bekannt und je nach Norm oder Standard-Messverfahren vorgegeben. Jede der bekannten Hüllflächen und die jeweils zugeordneten Messorte bilden jeweils eine Messverteilung. Die einzelnen Messverteilungen können vorab zusammengestellt und hinterlegt werden, sodass der Benutzer lediglich die für den nächsten Messvorgang gewünschte Messverteilung auswählen muss und anschließend der Messvorgang begonnen werden kann, ohne dass der Benutzer jeden einzelnen Messort für den Messvorgang vorgeben muss.

Um den Messvorgang zusätzlich zu vereinfachen und den Ablauf der einzelnen Messungen an den verschiedenen Messorten zusätzlich zu automatisieren ist optional vorgesehen, dass die mehreren Messorte in einer automatisiert vorgegebenen Reihenfolge auf der Anzeigeeinrichtung angezeigt werden. Dabei können einige oder alle Messorte zusammen mit deren Reihenfolge angezeigt werden, sodass ein Messweg für den vollständigen Messvorgang angezeigt wird. Es ist ebenfalls möglich, dass ein auf den aktuellen Messort nachfolgender Messort erst dann angezeigt wird, sobald mit dem mobilen Messgerät die Messung der physikalischen Größe an dem aktuellen Messort durchgeführt wurde. Der Benutzer wird dadurch nicht nur mit dem mobilen Messgerät an den aktuell zu vermessenden Messort herangeführt, sondern nach Abschluss der betreffenden Messung automatisch an den nächsten zu vermessenden Messort geführt, um dort die nächste Messung durchzuführen. Dabei kann bei Messverfahren, bei denen es nicht auf die Reihenfolge der einzelnen Messungen bzw. der jeweiligen Messorte ankommt, eine möglichst effiziente Abfolge der einzelnen Messorte vorgegeben werden. So kann beispielsweise der insgesamt zurückzulegende Messweg als Summe aller Abstände der aufeinanderfolgenden Messorte minimiert werden. Es ist ebenfalls möglich, bei einer quaderförmigen Hüllfläche jeweils die Messorte einer einzelnen Seitenfläche nacheinander vorzugeben, um anschließend zu der nächsten Seitenfläche der Hüllfläche bzw. zu den dort angeordneten Messorten überzugehen.

Es sind auch Messverfahren bekannt, bei denen die Reihenfolge der aufeinanderfolgenden Messorte durch eine entsprechende Norm oder eine Standardisierung vorgegeben ist, sodass die betreffende Abfolge der Messorte automatisiert als Reihenfolge für die durchzuführenden Messungen vorgegeben werden kann. Eine versehentlich falsch durchgeführte Abfolge der einzelnen Messungen kann dadurch vermieden werden, ohne dass dem Benutzer ein zusätzlicher Aufwand entsteht.

Es ist ebenfalls möglich, dass anstelle einzelner mehr oder weniger weit beabstandeter Messorte ein Messpfad vorgegeben ist. Der Messpfad kann als Summe einer großen Anzahl von aufeinanderfolgenden Messorten vorgegeben und die Reihenfolge der aufeinanderfolgenden Messorte automatisiert vorgegeben werden. Der Benutzer wird dann durch die aufeinanderfolgenden Messorte quasi-kontinuierlich mit dem mobilen Messgerät entlang des vorgegebenen Messpfads geführt. Im Falle einer automatisierten Auslösung der einzelnen Messungen muss der Benutzer lediglich das mobile Messgerät entlang des durch die Reihenfolge der einzelnen Messorte vorgegebenen Messpfads führen, wobei die einzelnen Messungen jeweils automatisch ausgelöst werden.

Gemäß einer vorteilhaften Ausgestaltung des erfindungsgemäßen Verfahrens ist vorgesehen, dass an dem mobilen Messgerät eine Referenzmarkierung angeordnet wird, die von der Messgerätpositionserfassungseinrichtung und/oder der Messgerätausrichtungserfassungseinrichtung erfasst und für die Ermittlung der Messgerätposition und/oder für die Ermittlung der Messgerätausrichtung verwendet wird. Die Referenzmarkierung kann ein einzelner visuell gut erkennbarer Referenzmarkierungspunkt sein, der von dem Benutzer oder von einer auf optischer Erkennung basierender Messgerätpositionserfassungseinrichtung gut wahrgenommen werden kann. Es ist ebenfalls möglich und insbesondere für die Erkennung der Ausrichtung des mobilen Messgeräts vorteilhaft, dass die Referenzmarkierung ein flächiges und nicht symmetrisches Referenzmuster aufweist, sodass nicht nur die Position, sondern auch die Ausrichtung des mobilen Messgeräts innerhalb des Messraums rasch und zuverlässig erfasst werden können. Es ist darüber hinaus auch denkbar, dass die Referenzmarkierung gesonderte Orts- oder Lageerfassungseinrichtungen aufweist, mit welchen Orts- und Lageinformationen erfasst und vorzugsweise drahtlos an die Messgerätpositionserfassungseinrichtung übermittelt werden können.

Für den Fall, dass mit einem Mikrofon oder mit einer Schallintensitätssonde eine räumliche Verteilung der Geräuschemission einer Geräuschquelle gemessen werden soll ist es zweckmäßig, dass die Referenzmarkierung aus einem akustisch möglichst durchlässigen Material wie beispielsweise aus einem über einen dünnen Rahmen gespannten bedruckten Stoff besteht, sodass die von der Geräuschquelle verursachte Geräuschemission und insbesondere deren räumliche Verteilung während eines Messvorgangs durch die Referenzmarkierung nicht übermäßig beeinflusst und gegebenenfalls verfälscht wird.

Im Hinblick auf einen möglichst großen Benutzerkomfort ist einer besonders vorteilhaften Ausgestaltung des Erfindungsgedankens zufolge vorgesehen, dass als Anzeigeeinrichtung eine Augmented-Reality-Brille verwendet wird. Der Benutzer kann die Augmented-Reality-Brille tragen und durch das Brillensichtfeld hindurch die Umgebung wahrnehmen. Zusätzlich können in das Brillensichtfeld die für die Positionierung und gegebenenfalls auch für die Ausrichtung des mobilen Messgeräts notwendigen Informationen eingeblendet, bzw. in das Brillensichtfeld projiziert werden. Eine für eine praktische Umsetzung des erfindungsgemäßen Verfahrens in vorteilhafter Weise verwendbare Augmented-Reality-Brille ist beispielsweise die von der Microsoft Corporation angebotene HoloLens®. Es ist ebenfalls denkbar, dass andere Anzeigeeinrichtungen wie beispielsweise ein Bildschirm oder aber ein Smartphone verwendet werden können.

Insbesondere bei der Verwendung einer Augmented-Reality-Brille als Anzeigeeinrichtung ist optional vorgesehen, dass als Messgerätpositionserfassungseinrichtung und/oder als Messgerätausrichtungserfassungseinrichtung eine Augmented-Reality-Brille verwendet wird. Die meisten der derzeit kommerziell erhältlichen oder in der Entwicklung befindlichen Augmented-Reality-Brillen beinhalten geeignete Sensoren und Auswerteeinrichtungen, um die Position der Augmented-Reality-Brille innerhalb der Umgebung zu erfassen, sodass die zusätzlichen Informationen positionsabhängig und positionsgetreu in das Brillensichtfeld eingeblendet werden können. Diese Sensoren und Auswerteeinrichtungen können in vorteilhafter Weise auch dazu verwendet werden, um die Position und gegebenenfalls auch die Ausrichtung des mobilen Messgeräts zu bestimmen, sobald sich dieses in dem Brillensichtfeld befindet, bzw. von der Augmented-Reality-Brille erfasst werden kann.

Im Hinblick auf eine noch weitergehende Automatisierung eines Messvorgangs ist optional vorgesehen, dass mit einer optischen Erfassungseinrichtung ein Objekt innerhalb des Messraums erfasst wird, dass mit einer Auswerteeinrichtung das mit der optischen Erfassungseinrichtung erfasste Objekt identifiziert und dessen Position in dem Messraum ermittelt wird, und dass der Referenzort für die mehreren Messorte anhand der ermittelten Position des identifizierten Objekts im Messraum vorgegeben wird. So können verschiedene Objekte, für welche häufig Messungen durchgeführt werden, vorab erfasst und die betreffenden Objektinformationen in einer mit der Auswerteeinrichtung verbundenen Datenspeichereinrichtung hinterlegt werden. Sobald mit Hilfe der optischen Erfassungseinrichtung, die ebenfalls vorzugsweise eine Augmented-Reality-Brille sein kann, ein Objekt erfasst und mit der Auswerteeinrichtung durch Vergleich mit den vorab hinterlegten Objektinformationen identifiziert werden kann, kann eine für das betreffende Objekt geeignete Messverteilung vorgegeben und der Messvorgang begonnen werden. Es ist ebenfalls möglich, dass mehrere geeignete Messverteilungen für das betreffende Objekt bekannt und hinterlegt sind, sodass dem Benutzer die mehreren Messverteilungen zur Auswahl angezeigt werden und der Messvorgang nach einer Auswahl der gewünschten Messverteilung durch den Benutzer begonnen wird.

Gemäß einer besonders vorteilhaften Ausgestaltung des Erfindungsgedankens ist vorgesehen, das erfindungsgemäße Verfahren zur Erfassung einer räumlichen Verteilung einer Geräuschemission einer Geräuschquelle zu verwenden. Zu diesem Zweck wird als mobiles Messgerät ein Mikrofon oder eine Schallintensitätssonde verwendet, und das Objekt ist eine Geräuschquelle. Mit dem Mikrofon oder der Schallintensitätssonde kann an den vorgegebenen Messorten jeweils die Geräuschemission gemessen werden, wobei beispielsweise mit einer aus zwei Mikrofonen bestehenden Schallintensitätssonde auch die Schallschnelle an dem Messort gemessen und für nachfolgende Auswertungen der Messergebnisse verwendet werden kann.

Nachfolgend werden verschiedene Ausgestaltungen und Aspekte des erfindungsgemäßen Verfahrens anhand der exemplarischen und schematischen Abbildungen näher erläutert, die in der Zeichnung dargestellt sind. Es zeigt:
Fig. 1 eine schematische Darstellung eines Objekts und einer das Objekt umgebenden Hüllfläche mit mehreren über die Hüllfläche verteilten Messorten,
Fig. 2 eine schematische Darstellung eines Brillensichtfelds einer Augmented-Reality-Brille, wobei sich das in Figur 1 gezeigte Objekt und ein von einem Benutzer gehaltenes mobiles Messgerät in dem Brillensichtfeld befinden und Informationen bezüglich der Positionierung des mobilen Messgeräts relativ zu einem Messort eingeblendet sind,
Fig. 3 eine schematische Darstellung des Brillensichtfelds gemäß Figur 2 mit anderen eingeblendeten Informationen,
Fig. 4 eine weitere schematische Darstellung des Brillensichtfelds gemäß Figur 2 und Figur 3 mit wiederum anderen eingeblendeten Informationen,
Fig. 5 eine schematische Darstellung eines mobilen Messgeräts, welches mit einer Referenzmarkierung versehen ist, und
Fig. 6 eine weitere schematische Darstellung des Brillensichtfelds gemäß den Figuren 2, 3 und 4 mit wiederum anderen eingeblendeten Informationen.

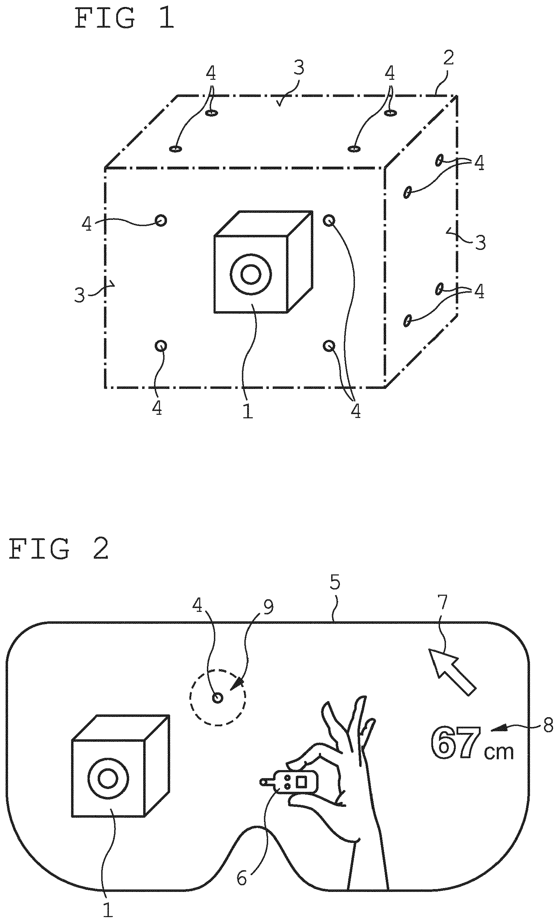

In Figur 1 ist exemplarisch eine schematisch dargestellte Geräuschquelle als Objekt 1 gezeigt. Für das Objekt 1 soll eine ortsaufgelöste Geräuschemissionsmessung, beispielsweise eine Messung einer räumlichen Verteilung des von der Geräuschquelle abgestrahlten Schalldrucks gemäß einem normierten Messvorgang durchgeführt werden, um die Geräuschemission der Geräuschquelle zu erfassen und angeben, bzw. vergleichen zu können. Der normierte Messvorgang für die räumliche Verteilung der Geräuschemission beinhaltet die Messung des Schalldrucks an mehreren Messorten, die in einer vorgegebenen räumlichen Verteilung um die Geräuschquelle, bzw. um das Objekt 1 herum angeordnet sind. Die betreffende Norm gibt beispielsweise eine mit strichpunktierten Linien angedeutete quaderförmige Hüllfläche 2 vor. Auf einzelnen Seitenflächen 3 der Hüllfläche 2 sind jeweils mehrere Messorte 4 vorgegeben, an denen jeweils eine Messung des Schalldrucks durchgeführt werden soll, um gemäß dem normierten Messverfahren die räumliche Verteilung des Schalldrucks bzw. der Geräuschemission des Objekts 1 zu erfassen.

Anstelle einer in Figur 1 exemplarisch dargestellten quaderförmigen Hüllfläche 2 sind aus der Praxis auch beispielsweise halbkugelförmige oder zylinderförmige Hüllflächen bekannt. Bei dem erfindungsgemäßen Verfahren kann in vorteilhafter Weise jede beliebige Hüllfläche bzw. räumliche Verteilung einzelner Messorte 4 innerhalb eines alle Messorte 4 beinhaltenden Messraums vorgegeben werden.

Zur Durchführung des Messvorgangs verwendet ein Benutzer eine nicht näher dargestellte Augmented-Reality-Brille, deren Brillensichtfeld 5 in nachfolgenden Figuren dargestellt ist. In Figur 2 wird das Brillensichtfeld 5 gezeigt, während der Benutzer ein für die Durchführung der Messung geeignetes Messgerät 6, in dem gezeigten Beispielfall ein Mikrofon, vor sich hält und an das Objekt 1 heranführt. Ein für die aktuelle Messung vorgegebener Messort 4 ist in das Brillensichtfeld 5 eingeblendet und in räumlicher Relation zu dem Objekt 1 dargestellt. Der Benutzer erhält zusätzlich an einem Seitenrand des Brillensichtfelds 5 einen Richtungspfeil 7 und eine Abstandsinformation 8 eingeblendet. Mit dem Richtungspfeil 7 wird die Richtung angezeigt, in welcher das Messgerät noch bewegt werden muss, um an den Messort 4 zu gelangen. Mit der Abstandsinformation 8 wird ein Messgeräteabstand als Abstand zwischen der aktuellen Messgeräteposition und dem Messort 4 beispielsweise in Zentimetern angegeben. Zusätzlich wird in dem Brillensichtfeld 5 eine Messorttoleranz 9 als Umhüllung des Messorts 4 angezeigt, sodass dem Benutzer zusätzlich die Information vermittelt wird, wie genau das Messgerät 6 an dem Messort 4 positioniert werden sollte, bevor die Messung durchgeführt wird.

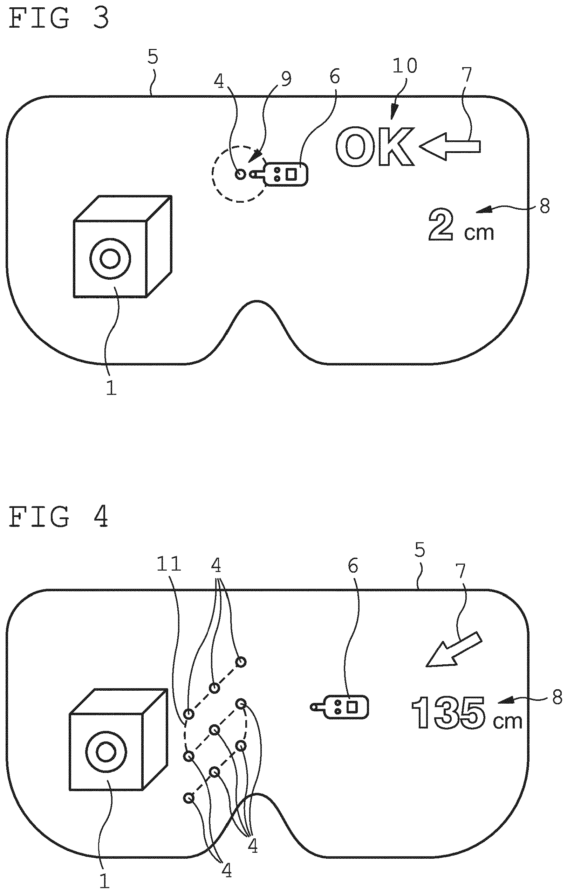

Dabei werden mit der Augmented-Reality-Brille, die als Anzeigeeinrichtung und gleichzeitig als Messgerätpositionserfassungseinrichtung verwendet wird, über die mit der Augmented-Reality-Brille erfassten stereoskopischen Bilder die jeweiligen Positionen des Objekts 1 und des Messgeräts 6 in dem Messraum erfasst und alle für die Durchführung des erfindungsgemäßen Verfahrens erforderlichen Informationen ermittelt und kontinuierlich angezeigt, bis das Messgerät 6 näher als die vorgegebene Messorttoleranz 9 an den Messort 4 herangeführt wurde. Sobald diese Bedingung erfüllt ist, wird in dem Brillensichtfeld 5 angezeigt, dass sich das Messgerät 6 ausreichend nah an dem Messort 4 befindet und eine Messung zu diesem Messort 4 vorgenommen werden kann. Dies wird in Figur 3 exemplarisch gezeigt, wobei der Benutzer durch das eingeblendete Symbol "OK" 10 darüber informiert wird, dass der Abstand des Messgeräts 6 zu dem Messort 4 geringer als die vorgegebene Messwerttoleranz ist.

Bei einer automatisierten Auslösung der Messung kann dem Benutzer zusätzlich angezeigt werden, dass die Messung automatisiert begonnen und gegebenenfalls bereits abgeschlossen wurde, oder dass der Messvorgang durchgeführt wird und die dafür benötigte Messdauer noch nicht abgelaufen ist. Gegebenenfalls können währenddessen zusätzlich der Richtungspfeil 7 und die Abstandsinformation 8 eingeblendet werden, damit der Benutzer die Position des Messgeräts 6 für die Dauer eines länger andauernden Messvorgangs kontrollieren und gegebenenfalls anpassen kann, wie es in Figur 3 gezeigt wird.

In Figur 4 ist exemplarisch ein Messpfad 11 dargestellt, der sich aus einer vergleichsweise großen Anzahl von einzelnen Messorten 4 zusammensetzt, wobei das Messgerät 6 in einer vorgegebenen Reihenfolge, bzw. Abfolge der Messorte 4 an den nächsten Messort 4 herangeführt werden soll, um dort eine Messung vorzunehmen und anschließend an den jeweils nachfolgenden Messort 4 herangeführt zu werden. Wenn die für eine Messung erforderliche Messdauer ausreichend kurz ist, kann der Benutzer das Messgerät 6 in einer nahezu oder vollständig kontinuierlichen Bewegung längs des Messpfads 11 entlangführen und dabei quasikontinuierlich ständig Messungen durchführen.

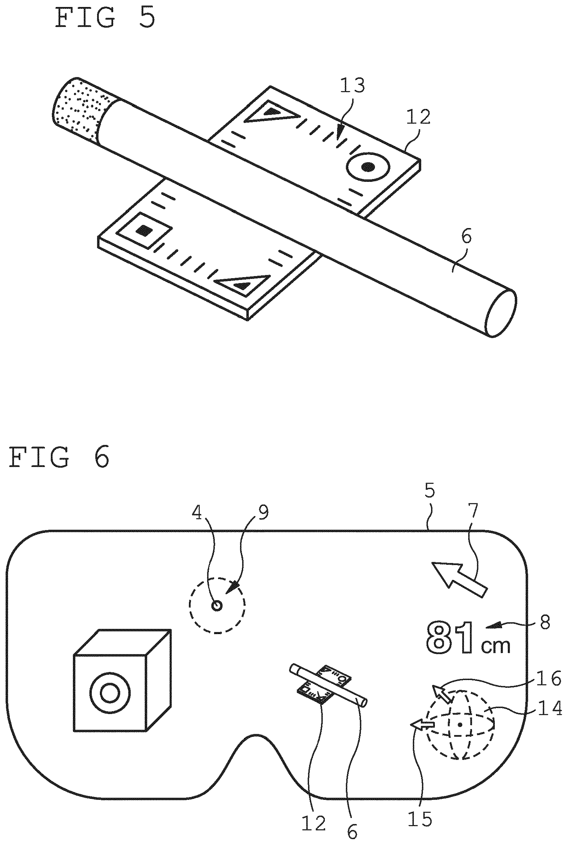

Um das Messgerät 6 innerhalb des Messraums bzw. innerhalb des Brillensichtfelds 5 möglichst präzise erfassen und dabei auch dessen Ausrichtung relativ zu dem Objekt 1 eindeutig erfassen zu können kann eine flächige oder dreidimensionale Referenzmarkierung an dem Messgerät 6 befestigt sein, die zusammen mit dem Messgerät 6 in dem Messraum bewegt und jeweils an einen Messort 4 herangeführt wird. Bei dem in Figur 5 exemplarisch dargestellten Ausführungsbeispiel ist eine zweidimensionale flächige Referenzmarkierung 12 an dem stabförmigen Messgerät 6 befestigt. Mit der Augmented-Reality-Brille kann die Position und Ausrichtung der Referenzmarkierung 12 innerhalb des Brillensichtfelds 5 erfasst und ausgewertet werden. Durch ein auf der Referenzmarkierung 12 angeordnetes Referenzmuster 13 kann auch für Messgeräte 6, deren Formgebung eine eindeutige Erfassung der Position und Ausrichtung im Messraum erschwert oder sogar unmöglich macht, rasch und zuverlässig deren Position und Ausrichtung erfasst werden.

In Figur 6 ist lediglich exemplarisch dargestellt, dass optional mit der Augmented-Reality-Brille zusätzlich zu dem Richtungspfeil 7 und der Abstandsinformation 8 eine Richtungskugel 14 in das Brillensichtfeld 5 eingeblendet wird, wobei die aktuelle Ausrichtung des Messgeräts 6 mit einem Istraumwinkelsymbol 15 und die für die Messung vorgegebene Ausrichtung des Messgeräts 6 mit einem Sollraumwinkelsymbol 16 in der Richtungskugel 14 angezeigt werden. Der Benutzer kann damit in einfacher Weise die für die Messung vorgegebene Ausrichtung bzw. die gegebenenfalls derzeit noch bestehende Ausrichtungsabweichung des Messgeräts 6 überprüfen und anpassen.

## Patentansprüche

1. Verfahren zur Erfassung einer räumlichen Verteilung einer mit einem mobilen Messgerät (6) messbaren physikalischen Größe innerhalb eines Messraums, wobei an mehreren vorgebbaren Messorten (4), die räumlich voneinander beabstandet sind, innerhalb des Messraums jeweils eine Messung der physikalischen Größe mit dem mobilen Messgerät (6) durchgeführt und das jeweilige Messergebnis dem betreffenden Messort (4) zugeordnet wird, **dadurch gekennzeichnet, dass** zur Messung an einem Messort (4) mit Hilfe einer Messgerätpositionserfassungseinrichtung eine aktuelle Messgeräteposition ermittelt wird, dass anschließend ein Messgeräteabstand zwischen dem noch zu erfassenden Messort (4) und der aktuellen Messgeräteposition ermittelt wird, wobei eine Abweichung zwischen der aktuellen Messgeräteposition von dem zu erfassenden Messort (4) mit Hilfe einer Anzeigeeinrichtung angezeigt wird, falls der ermittelte Messgeräteabstand größer als ein vorgegebener Messorttoleranzwert ist, und wobei mit dem mobilen Messgerät (6) die Messung der physikalischen Größe durchgeführt wird, wenn der Messgeräteabstand geringer als ein vorgegebener Messorttoleranzwert ist.

2. Verfahren nach Anspruch 1, **dadurch gekennzeichnet, dass** zur Messung an einem Messort (4) mit Hilfe einer Messgerätausrichtungserfassungseinrichtung eine aktuelle Messgeräteausrichtung in dem Messraum ermittelt wird, und dass eine Ausrichtungsabweichung zwischen der aktuellen Messgeräteausrichtung von einer für den betreffenden Messort (4) vorgegebenen Messgeräteausrichtung ermittelt wird.

3. Verfahren nach Anspruch 2, **dadurch gekennzeichnet, dass** zur Messung an einem Messort (4) eine Ausrichtungsabweichung zwischen der aktuellen Messgeräteausrichtung von einer für den betreffenden Messort (4) vorgegebenen Messgeräteausrichtung mit Hilfe einer Anzeigeeinrichtung angezeigt wird, falls die ermittelte Ausrichtungsabweichung größer als ein vorgegebener Ausrichtungstoleranzwert ist, und dass mit dem mobilen Messgerät (6) die Messung der physikalischen Größe nur dann durchgeführt wird, wenn die Ausrichtungsabweichung geringer als ein vorgegebener Ausrichtungstoleranzwert ist.

4. Verfahren nach einem der vorangehenden Ansprüche, **dadurch gekennzeichnet, dass** für die Erfassung einer räumlichen Verteilung einer mit einem mobilen Messgerät (6) messbaren physikalischen Größe innerhalb eines Messraums eine Anzahl von vorgegebenen Messverteilungen mit jeweils mehreren Messorten (4) relativ zu einem Referenzort in dem Messraum vorgegeben werden und nach Auswahl einer der mehreren Messverteilungen die mehreren Messorte (4) der ausgewählten Messverteilung nacheinander auf der Anzeigevorrichtung angezeigt werden, wobei ein auf den aktuellen Messort (4) nachfolgender Messort angezeigt wird, sobald mit dem mobilen Messgerät (6) die Messung der physikalischen Größe an dem aktuellen Messort (4) durchgeführt wurde.

5. Verfahren nach einem der vorangehenden Ansprüche, **dadurch gekennzeichnet, dass** die mehreren Messorte (4) in einer automatisiert vorgegebenen Reihenfolge auf der Anzeigeeinrichtung angezeigt werden.

6. Verfahren nach Anspruch 5, **dadurch gekennzeichnet, dass** ein auf den aktuellen Messort (4) nachfolgender Messort angezeigt wird, sobald mit dem mobilen Messgerät die Messung der physikalischen Größe an dem aktuellen Messort durchgeführt wurde.

7. Verfahren nach einem der vorangehenden Ansprüche, **dadurch gekennzeichnet, dass** an dem mobilen Messgerät (6) eine Referenzmarkierung (14) angeordnet wird, die von der Messgerätpositionserfassungseinrichtung und/oder der Messgerätausrichtungserfassungseinrichtung erfasst und für die Ermittlung der Messgerätposition und/oder für die Ermittlung der Messgerätausrichtung verwendet wird.

8. Verfahren nach einem der vorangehenden Ansprüche, **dadurch gekennzeichnet, dass** als Anzeigeeinrichtung eine Augmented-Reality-Brille verwendet wird.

9. Verfahren nach einem der vorangehenden Ansprüche, **dadurch gekennzeichnet, dass** als Messgerätpositionserfassungseinrichtung und/oder als Messgerätausrichtungserfassungseinrichtung eine Augmented-Reality-Brille verwendet wird.

10. Verfahren nach einem der vorangehenden Ansprüche, **dadurch gekennzeichnet, dass** mit einer optischen Erfassungseinrichtung ein Objekt (1) innerhalb des Messraums erfasst wird, dass mit einer Auswerteeinrichtung das mit der optischen Erfassungseinrichtung erfasste Objekt (1) identifiziert und dessen Position in dem Messraum ermittelt wird, und dass ein Referenzort für die mehreren Messorte (4) anhand der ermittelten Position des identifizierten Objekts (1) im Messraum vorgegeben wird.

11. Verfahren nach einem der vorangehenden Ansprüche, **dadurch gekennzeichnet, dass** das mobile Messgerät (6) ein Mikrofon oder eine Schallintensitätssonde ist und das Objekt (1) eine Geräuschquelle ist, und dass mit dem Verfahren eine räumliche Verteilung der Geräuschemission des Objekts (1) ermittelt wird.

12. Verfahren nach Anspruch 11, **dadurch gekennzeichnet, dass** an dem Mikrofon oder an der Schallintensitätssonde eine Referenzmarkierung (14) aus einem akustisch möglichst durchlässigen Material angeordnet wird, die von der Messgerätpositionserfassungseinrichtung und/oder der Messgerätausrichtungserfassungseinrichtung erfasst und für die Ermittlung der Messgerätposition und/oder für die Ermittlung der Messgerätausrichtung verwendet wird.

## Claims

1. Method for detecting a spatial distribution of a physical quantity, measurable via a mobile measuring apparatus (6), inside a measuring room, wherein at several prescribed measuring locations (4) inside the measuring room, that are spatially distant from one another, a measurement of the physical quantity is performed in each case using the mobile measuring apparatus (6) and the respective measurement result is assigned to the relevant measuring location (4), **characterised in that** for the measurement at a measuring location (4), a current measuring apparatus position is determined using a measuring apparatus position detection means, subsequently a measuring apparatus distance between the measuring location (4) yet to be detected and the current measuring apparatus position is determined, wherein a deviation between the current measuring apparatus position and the measuring location (4) yet to be detected is displayed using a display means if the measuring apparatus distance determined is greater than a prescribed measuring location tolerance value, and wherein the measurement of the physical quantity is performed using the mobile measuring apparatus (6) if the measuring apparatus distance is less than a prescribed measuring location tolerance value.

2. Method according to claim 1, **characterised in that** for the measurement at a measuring location (4), a current measuring apparatus orientation inside the measuring room is determined using a measuring apparatus orientation detection means, and an orientation deviation between the current measuring apparatus orientation and a prescribed measuring apparatus orientation for the relevant measuring location (4) is determined.

3. Method according to claim 2, **characterised in that** for the measurement at a measuring location (4), an orientation deviation between the current measuring apparatus orientation and a prescribed measuring apparatus orientation for the relevant measuring location (4) is displayed using a display means if the determined orientation deviation is greater than a prescribed orientation tolerance value, and the measurement of the physical quantity is only performed using the mobile measuring apparatus (6) if the orientation deviation is less than a prescribed orientation tolerance value.

4. Method according to one of the preceding claims, **characterised in that** for the detecting of a spatial distribution of a physical quantity, measurable via a mobile measuring apparatus (6), inside a measuring room, a number of prescribed measuring distributions each with several measuring locations (4) relative to a reference location inside the measuring room are specified and after one of the several measuring distributions is selected, the several measuring locations (4) of the selected measuring distribution are shown one after another on the display device, wherein a measuring location subsequent to the current measuring location (4) is displayed as soon as the measurement of the physical quantity at the current measuring location (4) has been performed using the mobile measuring apparatus (6).

5. Method according to one of the preceding claims, **characterised in that** the several measuring locations (4) are displayed in an automatically predetermined sequence on the display means.

6. Method according to claim 5, **characterised in that** a measuring location subsequent to the current measuring location (4) is displayed as soon as the measurement of the physical quantity at the current measuring location has been performed using the mobile measuring apparatus.

7. Method according to one of the preceding claims, **characterised in that** a reference marker (14) is positioned on the mobile measuring apparatus (6), and is detected by the measuring apparatus position detection means and/or the measuring apparatus orientation detection means and used for determining the measuring apparatus position and/or for determining the measuring apparatus orientation.

8. Method according to one of the preceding claims, **characterised in that** augmented reality glasses are used as the display means.

9. Method according to one of the preceding claims, **characterised in that** augmented reality glasses are used as the measuring apparatus position detection means and/or as the measuring apparatus orientation detection means.

10. Method according to one of the preceding claims, **characterised in that** an object (1) inside the measuring room is detected using an optical detection means, the object (1) detected using the optical detection means is identified and its position in the measuring room determined using an evaluation means, and a reference location for the several measuring locations (4) is prescribed on the basis of the determined position of the identified object (1) inside the measuring room.

11. Method according to one of the preceding claims, **characterised in that** the mobile measuring apparatus (6) is a microphone or a sound intensity probe and the object (1) is a noise source, and a spatial distribution of the noise emission of the object (1) is determined using the method.

12. Method according to claim 11, **characterised in that** a reference marker (14) made from an optimally acoustically permeable material is positioned on the microphone or on the sound intensity probe, and is detected by the measuring apparatus position detection means and/or the measuring apparatus orientation detection means and used for determining the measuring apparatus position and/or for determining the measuring apparatus orientation.

## Revendications

1. Procédé de détection de la répartition spatiale, au sein d'un espace de mesure, d'une grandeur physiquement mesurable à l'aide d'un appareil de mesure mobile (6) permettant de mesurer cette grandeur physique avec l'appareil de mesure mobile à différents points de mesure prédéfinis (4) et espacés les uns des autres au sein de l'espace de mesure, chaque mesure étant ensuite attribuée au point de mesure (4) auquel elle se rapporte, **caractérisé en ce que** l'indication d'une position de l'appareil de mesure en temps réel déterminée par un dispositif de géolocalisation de l'appareil de mesure, de façon à calculer, finalement, la distance qui sépare le point de mesure (4) restant à détecter de la position en temps réel de l'appareil de mesure, sachant que l'écart entre la position en temps réel de l'appareil de mesure et le point de mesure (4) à détecter est alors affiché à l'aide d'un dispositif d'affichage si la distance détectée est supérieure à une valeur de tolérance prédéfinie, et sachant que l'appareil de mesure mobile (6) procède à la mesure de la grandeur physique si la distance détectée est inférieure à une valeur de tolérance prédéfinie.

2. Procédé selon la revendication 1, **caractérisé en ce qu'**un dispositif de détermination de l'orientation de l'appareil de mesure détermine l'orientation en temps réel de l'appareil destiné à réaliser la mesure sur un point de mesure (4) et calcule un éventuel écart entre l'orientation en temps réel de l'appareil de mesure et celle prédéfinie pour le point de mesure (4) concerné.

3. Procédé selon la revendication 2, **caractérisé en ce que**, si l'orientation détectée est supérieure à une valeur de tolérance prédéfinie pour la mesure en un point de mesure (4), l'écart d'orientation entre l'orientation en temps réel de l'appareil de mesure et celle prédéfinie pour le point de mesure (4) concerné est affiché à l'aide d'un dispositif d'affichage et que, si l'orientation détectée est inférieure à la valeur de tolérance prédéfinie, l'appareil de mesure (6) procède alors à la mesure de la grandeur physique.

4. Procédé selon l'une quelconque des revendications précédentes, **caractérisé en ce que**, pour la détection d'une répartition spatiale, au sein d'un espace donné, d'une grandeur physiquement mesurable à l'aide d'un appareil de mesure mobile (6), un certain nombre de répartitions de mesures sont prédéfinies avec, à chaque fois, plusieurs points de mesure (4) par rapport à un point de référence dans l'espace à mesurer et que, après sélection de l'une des répartitions de mesures, les différents points de mesure (4) correspondant à la répartition sélectionnée sont affichés sur le dispositif d'affichage, sachant que l'affichage passe au point de mesure suivant le point de mesure (4) en temps réel, dès que l'appareil de mesure mobile (6) a réalisé la mesure de la grandeur physique au point de mesure (4) actuel.

5. Procédé selon l'une quelconque des revendications précédentes, **caractérisé en ce que** les différentes points de mesure (4) sont affichés sur le dispositif d'affichage dans un ordre prédéfini de manière automatique.

6. Procédé selon la revendication 5, **caractérisé en ce qu'**un point de mesure suivant celui en temps réel (4) est affiché dès que l'appareil de mesure mobile (6) a réalisé la mesure de la grandeur physique au point de mesure (4) actuel.

7. Procédé selon l'une quelconque des revendications précédentes, **caractérisé en ce qu'**un marquage de référence (14) placé sur l'appareil de mesure mobile (6) est détecté par le dispositif de géolocalisation et/ou de détection d'orientation de l'appareil de mesure et utilisé pour déterminer la position et/ou l'orientation de l'appareil de mesure.

8. Procédé selon l'une quelconque des revendications précédentes, **caractérisé en ce que** le dispositif d'affichage utilisé consiste en une paire de lunettes de réalité augmentée.

9. Procédé selon l'une quelconque des revendications précédentes, **caractérisé en ce que** le dispositif de géolocalisation et/ou de détection d'orientation de l'appareil de mesure utilisé consiste en une paire de lunettes de réalité augmentée.

10. Procédé selon l'une quelconque des revendications précédentes, **caractérisé en ce qu'**un objet (1) est détecté à l'aide d'un dispositif de détection optique au sein d'un espace de mesure, identifié à l'aide d'un dispositif d'analyse, **en ce que** la position de cet objet (1) au sein de l'espace de mesure est calculée et **en ce qu'**un point de référence pour les différents points de mesure (4) est prédéfini à partir de la position de l'objet (1) identifié.

11. Procédé selon l'une quelconque des revendications précédentes, **caractérisé en ce que** l'appareil de mesure mobile (6) est équipé d'un microphone ou d'un capteur d'intensité acoustique et que l'objet (1) consiste en une source sonore, de sorte que le procédé permette de déterminer la répartition spatiale des ondes sonores émises par l'objet (1).

12. Procédé selon la revendication 11, **caractérisé en ce qu'**un marquage de référence (14) réalisé dans un matériau le plus acoustiquement perméable possible et placé sur le microphone ou le capteur d'intensité acoustique est détecté par le dispositif de géolocalisation et/ou de détection d'orientation de l'appareil de mesure et utilisé pour déterminer la position et/ou l'orientation de l'appareil de mesure.
